# EUROPEAN PATENT SPECIFICATION

(11) **EP 3 454 080 B1**
(45) Date of publication and mention of the grant of the patent: **01.11.2023**
(21) Application number: 17190579.7
(22) Date of filing: 12.09.2017
(51) Int. Cl.: G01S 7/41, G01S 13/42, G01S 13/931, G01S 13/58, G01S 13/72, G01S 13/02

(54) **SINGLE SCATTERER TEST USING PHASE CHANGE**
EINZELSTREUERTEST UNTER VERWENDUNG DER PHASENÄNDERUNG
TEST DE DIFFUSEUR UNIQUE AU MOYEN D'UN CHANGEMENT DE LA PHASE

(43) Date of publication of application: 13.03.2019
(73) Proprietor: Aptiv Technologies Limited, St. Michael (BB)
(72) Inventor: STATNIKOV, Konstantin, 40239 Düsseldorf (DE); IOFFE, Alexander, 53229 Bonn (DE)
(74) Representative: Manitz Finsterwald Patent- und Rechtsanwaltspartnerschaft mbB

(56) References cited:
- EP-A1- 2 998 761
- EP-A1- 3 144 696
- US-A1- 2016 084 943

## Description

### TECHNICAL FIELD

This invention relates to a method of detection and subsequent characterization of objects using radar techniques and in particular determining whether an object is a single scatterer. It has application in determining a suitable landmark for geographical mapping for the purpose of determining the position of a host vehicle.

### BACKGROUND OF THE INVENTION

Self-localization, that is determining the precise location of a host vehicle is one of the most important functions for accurate automated driving or such driver assistance schemes such as collision prevention systems. Current car navigation systems generally use a GPS navigation system to estimate the vehicle position. However, such a GPS navigation system is insufficient for precise self-localization of road vehicles due to effects such as reflections caused by buildings and occlusions of GPS signals from satellites. To overcome this problem, many landmark-based ego localization approaches have been elaborated in the past.

It is known to equip vehicles with radar systems/modules. Such radar systems are able to detect radar reflections (i.e. radar detections) from objects in the vicinity and process the data with respect to said radar reflections. Usually, the information needed for current self-localization and mapping (SLAM) procedure is collected from such (reflection/detection) data provided by the radar modules over multiple consecutive scans to identify for example a fixed landmark. This mapping information is updated over time, and a precise superposition of the individual radar-based maps with the GPS maps is performed. In such a way, for example the geographical position determined by GPS is accurately refined by such local data from radar returns.

Thus, in order to reduce the accumulation of errors introduced by non-precise superposition, landmark-based alignment of those radar images is a preferred solution. In the landmark-based SLAM procedure, a key task is to determine one or more suitable landmarks (i.e. objects) in the environment, i.e. in the vicinity of the vehicle which could serve as suitable and quality positional references (anchors) for precise superposition of the individual maps.

Available landmark determination approaches are based on e.g. signal-to-clutter ratio, point spread function matching, image analysis (e.g. by gradient analysis, or template matching etc.), likelihood ratio test, range bin variance analysis or differential interferogram methodologies. However, those approaches are not intended for the automotive environment. Landmarks have been previously examined by single-scan observations from a certain view-angle. Those approaches are typically not robust enough due to complexity of the automotive environment.

Determining whether an object is a single-scatterer can be helpful in determining whether a landmark is suitable so an aim is to determine the extent to which a scatterer under test (SUT) is a single scatterer (originates from a single scattering center). For example, pulse-Doppler radar signal processing can be used to separate reflected signals into a number of "peaks", which occur in the 2-D spectral domain (called range-Doppler map). This spectral data collected from multiple radar receiver channels is utilized to carry out the here proposed single scatterer test.

Several state-of-the-art techniques are known which can be used to determine whether a target response originates from a single scatterer or not (e.g. the co-pending application EP 3 144 696 A1). One method to analyze if a target response originates from a single scatterer is to involve a (complex-valued) cross-correlation between the measured radar response with the corresponding so called system-dependent Point Spread Function (PSF). PSF of a radar system describes namely its response to an ideal single-scatterer target. If the correlation coefficient is below a (e.g. predetermined) threshold, then the target is considered to be a non-single scatterer.

The cross-correlation involves computational complexity. Additionally, this method is not very sensitive. The current application relates to an improved method of determining whether a target object identified is a single scatterer.

EP 3 144 696 A1 discloses a vehicle based method comprising the features according to the preamble of claim 1.

EP 2 998 761 A1 discloses a vehicle based method comprising features according to a related technology.

US 2016/0084943 A1 also discloses a vehicle based method comprising features according to a related technology.

It is an object of the invention to overcome the problems described above. One object is to provide a method to determine the suitability of a landmark as a reference. The aim of the proposed method is to determine the extent to which a scatterer under test (SUT) is a single scatterer (originates from a single scattering center).

### SUMMARY OF THE INVENTION

It is provided a vehicle based method of determining the extent to which a target object is a single scatterer, said vehicle including a radar system including a radar transmit element, adapted to send a radar signal towards said target object, and an antenna receive element adapted to receive radars signals reflected from said target object, said method comprising the steps according to claim 1.

In step c) signal data may be converted from the base time-domain to a range-Doppler frequency domain.

Step c) may include providing a range-Doppler map in terms of range-Doppler frequency domain.

Step c) may include providing phase data in term of range-Doppler frequency bins.

In step c) only phase information from the 2-D measured data in a range-Doppler domain is extracted for frequencies or bins where the amplitude or power exceeds a threshold or which have a minimum signal-to-noise ratio. Step d) may comprise measuring bin-to-bin phase change across the measured 2-D point spread function evaluated in a range-Doppler domain.

### BRIEF DESCRIPTION OF THE DRAWINGS

The present invention is now described by way of example with reference to the accompanying drawings in which:
Figure 1 shows a flowchart of basic methodology;
Figure 2 shows a schematic showing two PSFs corresponding to two scattering centers located in a close proximity to each other in space/ in spectrum;
Figure 3 shows the results of phase determined against frequency bin for a spectral response of a non-single-scatterer target (comprised as a superposition of two individual targets/responses).

### DESCRIPTION OF THE PREFERRED EMBODIMENTS

The aim of the proposed method is to determine the extent to which a scatterer under test (SUT) is a single scatterer (originates from a single scattering center). For example, pulse-Doppler radar signal processing can be used to separate reflected signals into a number of "peaks", which occur in the 2-D spectral domain (called range-Doppler map). This spectral data is utilized to carry out the here proposed single scatterer test.

The problem of determination if a radar backscatter return originates from a single scattering center is solved using an efficient method of a 2-D phase evaluation in the range-Doppler domain.

The 2-D frequency-domain data (the range-Doppler map) is analyzed.

Typically the data is arranged in terms of a set of frequency ranges or "bins". As it is a matter of interference between signals reflected from scattering centers located in relative close proximity to each other (in terms of range/Doppler frequencies), relative phase difference between signals can be directly evaluated in the frequency domain local to the superposed signal frequency bin.

In the proposed method, phase information from the (2-D) measured complex data (in the range-Doppler domain) is extracted at the position of the peak (considering only those bins where the amplitude exceeds some threshold or having a minimum SNR, respectively). Then, the bin-to-bin phase change across the (whole) measured 2-D PSF (corresponding to a detected target) is evaluated in the range-Doppler domain. The amount of the neighboring bins is not limited. Even having only two neighboring bins (offering the needed SNR), the test can be executed.

The method is executed on the bins from the main-lobe 2-D region of the PSF (also called "peak").

In a preferred example, the method may be reduced (for a better runtime performance) to the phase analysis of only the vectors in the two orthogonal dimensions (range and Doppler) going through the estimated amplitude peak position (as a function of range/Doppler frequency). This provides a sub-set of bins compared to the analysis of all bins of a 2-D PSF.

In the specifics of the methodology, if the absolute bin-to-bin phase change (slope) exceeds some known threshold (which may be different for the different bins of a PSF), then the target is considered to be a non-single scatterer.

For example, the phase of all bins belonging to the main lobe of an ideal single scatterer PSF would be namely equal/"flat" when the windowing function is symmetrical, the number of samples (processed by e.g. a Fourier transform) is odd, and (if zero padding is needed) the so-called zero-phase zero padding approach is applied.

This methodology is applicable to a system which includes a single receiver channel (receiver element), but also on M range-Doppler responses (maps) from N receiver (RX) channels.

### Example

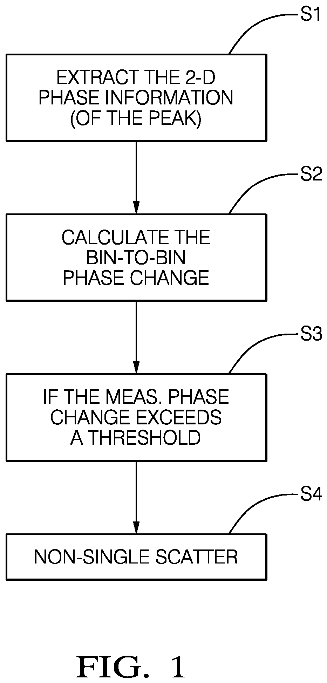

Figure 1 shows a flow chart of the general methodology according to one aspect;
A (vehicle-based) radar system comprising an antenna transmit element and a receive element (or array) having at least one receive element sends out a radar signal and so the received reflected signal from a target object is received by the receiver element(s) and processed. The subsequent processing of the received radar signal, i.e. analysis is described with reference to flowchart of figure 1.

In the proposed method, 2-D frequency-domain data (a range-Doppler map) is analyzed. In step S1 the phase of the signal is extracted from the 2-D frequency domain data at the position of the amplitude peak. Typically, the data is arranged in terms of a set of frequency ranges - so called Doppler "bins". As it is a matter of interference between signals reflected from scattering centers located in relative close proximity to each other in space (and/or having similar Doppler frequency), amplitude spectral information from the (2-D) measured complex data (in the range-Doppler domain) are evaluated at the position of the resulting "peak" to determine if the measured response originates from a single scattering center or not.

In step S2 the frequency (bin) to frequency (bin) phase is determined.

In step S3 the phase change from one frequency (bin) to a neighboring one frequency (bin) is compared with a threshold. If this phase difference (after phase unwrapping) exceeds the threshold in step S4, the target is identified as a non-single scatterer.

### Theory

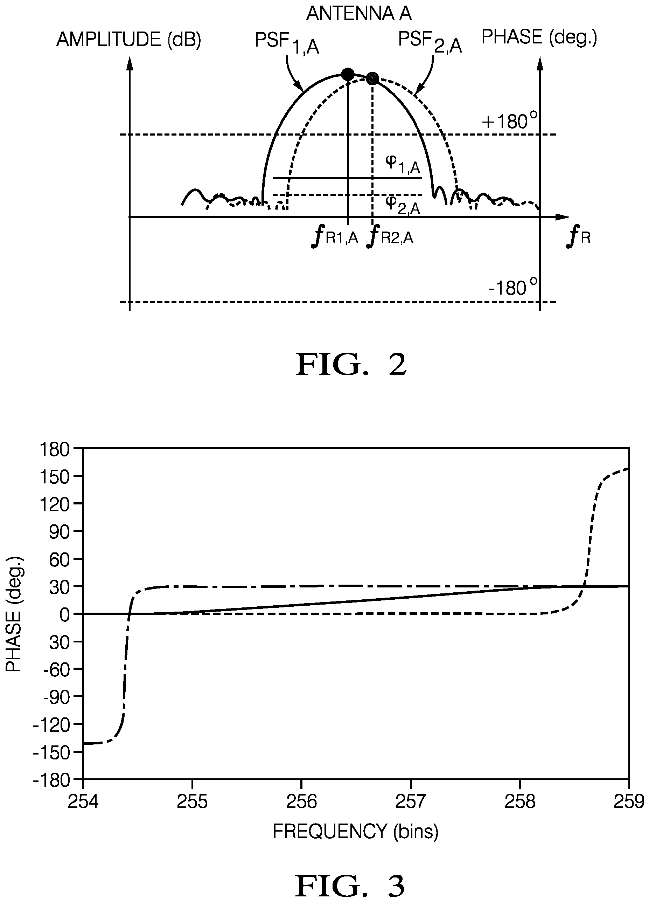

Consider a situation where two scattering centers (referred to as Target 1 and 2) are located in a close proximity to each other in space (having the same Doppler frequency). Then, at the receiver antenna, a superposition of those two scattered signals occurs. In the range-Doppler map, the PSFs from two targets e.g. of a non-single scatterer (named PSF1 and PSF2) referenced as PSF 1, A and PSF 2, A may be close to each other and would overlap - see figure 2. Thus, the amplitudes and the phases of the complex-valued PSFs have a strong influence on the resulting PSF due to complex superposition of the individual PSFs (see figure 2). The peak amplitude is shown at frequency fR1, A and fR2, A respectively for the PSF1, A and PSF 2, A.

Exemplarily, a 1-D case was simulated where two PSFs with a frequency distance of 1.0 frequency bin were put in a close proximity to each other. The first PSF (PSF1) has amplitude of 1.0 and phase of 0 degrees, and the second one (PSF2) has amplitude of 0.9 and phase of 30 degrees.

Figure 3 shows the results of phase determined against frequency bin for the first PSF only (reference numeral 1) the second PSF only (reference numeral 2) and for the actual superposed signal (which is the signal that would be received in reality): reference numeral 3.

So figure 3, shows the simulated phase spectrum (e.g. phase vs. frequency bins shown as a 1-D cut through a 2-D frequency map). As one can see, the phase of the superposed resulting peak is not flat. Thus, the peak under tests is determined to originate from a non-single scatterer.

In contrast to the method disclosed on European Patent Application EP 3 144 696 A1, no symmetry needs to be considered. Thus, the here proposed method could be executed even having only two neighboring bins (offering the needed SNR), instead of three, which would be needed in EP 3 144 696 A1.

The method is very sensitive, can be executed on a single range-Doppler map (originating from a single RX channel), and has a low computational cost.

## Claims

1. A vehicle based method of determining the extent to which a target object is a single scatterer, said vehicle including a radar system including a radar transmit element, adapted to send a radar signal towards said target object, and an antenna receive element adapted to receive radar signals reflected from said target object, said method comprising:
a) transmitting a radar signal from said radar transmit element to said target object;
b) receiving the reflected signal of the signal transmitted in step a) from the target object at said antenna receive element;
c) processing the received signal to provide phase data originating from the single antenna receive element in the frequency domain in relation to discrete frequency bins comprising frequency ranges (S1);
d) determining a bin-to-bin phase difference between at least two neighboring frequency bins (S2);
**characterized by**
e) determining whether the target object is a single scatterer based on the results of step d), wherein the target object is considered to be a non-single scatterer if the phase difference between two neighboring frequency bins is above a threshold (S3, S4) for the single antenna receive element;
f) steps d) and e) are only performed for the bins (f_{R1,A}, f_{R2,A}) from a main-lobe region of a received radar point spread function (PSF_{1,A}, PSF_{2,A}).

2. The method as claimed in claims 1 wherein in step c) signal data is converted from the base time-domain to a range-Doppler frequency domain.

3. The method as claimed in claims 1 or 2 wherein step c) includes providing a range-Doppler map in terms of range-Doppler frequency domain.

4. The method as claimed in claims 1 to 3 wherein step c) includes providing phase data in term of range-Doppler frequency bins.

5. The method as claimed in claims 1 to 4 wherein in step c) only phase
information from the 2-D measured data in a range-Doppler domain is extracted for frequencies or bins (f_{R1,A}, f_{R2,A}) where the amplitude or power exceeds a threshold or which have a minimum signal-to-noise ratio.

6. The method as claimed in claims 1 to 5 wherein step d) comprises
measuring bin-to-bin phase change across the measured 2-D point spread function (PSF_{1,A,}, PSF_{2,A,}) evaluated in a range-Doppler domain.

## Patentansprüche

1. Fahrzeugbasiertes Verfahren zum Ermitteln des Ausmaßes, mit dem ein Targetobjekt ein Einzelstreuer ist, wobei das Fahrzeug ein Radarsystem mit einem Radar-Sendeelement, das zum Senden eines Radarsignals in Richtung des Targetobjekts ausgebildet ist, und mit einem Antennen-Empfangselement aufweist, das zum Empfangen von Radarsignalen ausgebildet ist, die von dem Targetobjekt reflektiert werden, wobei das Verfahren umfasst:
a) Senden eines Radarsignals von dem Radar-Sendeelement zu dem Targetobjekt;
b) Empfangen des reflektierten Signals desjenigen Signals, das in Schritt a) gesendet wurde, von dem Targetobjekt an dem Antennen-Empfangselement;
c) Verarbeiten des empfangenen Signals, um Phasendaten, die von dem Einzelantennen-Empfangselement stammen, in der Frequenzdomäne bezogen auf diskrete Frequenzbins, die Frequenzbereiche umfassen, bereitzustellen (S1);
d) Ermitteln einer Bin-zu-Bin-Phasendifferenz zwischen zumindest zwei benachbarten Frequenzbins (S2);
**gekennzeichnet durch**
e) Ermitteln, ob das Targetobjekt ein Einzelstreuer ist, basierend auf den Ergebnissen des Schritts d), wobei das Targetobjekt als ein Nicht-Einzelstreuer angesehen wird, wenn die Phasendifferenz zwischen zwei benachbarten Frequenzbins oberhalb eines Schwellenwerts (S3, S4) für das Einzelantennen-Empfangselement liegt;
f) wobei die Schritte d) und e) nur für die Bins (f_{R1,A}, f_{R2,A}) aus einem Hauptkeulenbereich einer empfangenen Radar-Punktstreufunktion (PSF_{1,A}, PSF_{2,A}) ausgeführt werden.

2. Verfahren nach Anspruch 1, wobei in Schritt c) Signaldaten aus der Basis-Zeitdomäne in eine Entfernungs-Doppler-Frequenzdomäne umgewandelt werden.

3. Verfahren nach Anspruch 1 oder 2, wobei Schritt c) umfasst, dass eine Entfernungs-Doppler-Karte bezogen auf eine Entfernungs-Doppler-Frequenzdomäne bereitgestellt wird.

4. Verfahren nach einem der Ansprüche 1 bis 3, wobei Schritt c) umfasst, dass die Phasendaten bezogen auf Entfernungs-Doppler-Frequenzbins bereitgestellt werden.

5. Verfahren nach einem der Ansprüche 1 bis 4, wobei in Schritt c) nur Phaseninformationen anhand der 2-D-Messdaten in einer Entfernungs-Doppler-Domäne für Frequenzen oder Bins (f_{R1,A}, f_{R2,A}) extrahiert werden, bei welchen die Amplitude oder Leistung einen Schwellenwert überschreitet oder welche ein minimales Signal-Rauschverhältnis aufweisen.

6. Verfahren nach einem der Ansprüche 1 bis 5, wobei Schritt d) umfasst, dass eine Bin-zu-Bin-Phasenänderung über die gemessene 2-D-Punktstreufunktion (PSF_{1,A}, PSF_{2,A}) gemessen wird, die in einer Entfernungs-Doppler-Domäne ausgewertet wird.

## Revendications

1. Procédé basé sur un véhicule pour déterminer dans quelle mesure un objet cible est un diffuseur unique, ledit véhicule incluant un système radar incluant un élément d'émission radar, adapté pour envoyer un signal radar vers ledit objet cible, et un élément de réception à antenne, adapté pour recevoir des signaux radar réfléchis depuis ledit objet cible, ledit procédé comprenant les étapes consistant à :
a) émettre un signal radar depuis un élément d'émission radar jusqu'audit objet cible ;
b) recevoir le signal réfléchi du signal émis dans l'étape a) depuis l'objet cible au niveau dudit élément de réception à antenne ;
c) traiter le signal reçu pour fournir des données de phase provenant de l'élément de réception à antenne unique dans le domaine de fréquence en relation avec des casiers, dits bins, de fréquence discrète comprenant des plages de fréquence (S1) ;
d) déterminer une différence de phase bin à bin entre au moins deux bins de fréquence voisins (S2) ;
**caractérisé par** les étapes consistant à
e) déterminer si l'objet cible est un diffuseur unique sur la base des résultats de l'étape d), l'objet cible étant considéré comme étant un diffuseur non-unique si la différence de phase entre deux bins de fréquence voisins est au-dessus d'un seuil (S3, S4) pour l'élément de réception à antenne unique ;
f) les étapes d) et e) sont uniquement exécutées pour les bins (f_{R1,A}, f_{R2,A}) à partir d'une région de lobe principal d'une fonction de propagation de point radar reçu (PSF_{1,A}, PSF_{2,A}).

2. Procédé selon la revendication 1, dans lequel, dans l'étape c), des données de signaux sont converties depuis le domaine temporel de base en un domaine de fréquence de distance-Doppler.

3. Procédé selon la revendication 1 ou 2, dans lequel l'étape c) inclut de fournir une carte distance-Doppler en termes de domaine de fréquence de distance-Doppler.

4. Procédé selon les revendications 1 à 3, dans lequel l'étape c) inclut de fournir des données de phase en termes de bins de fréquence distance-Doppler.

5. Procédé selon les revendications 1 à 4, dans lequel, dans l'étape c), uniquement des informations de phase à partir des données mesurées en 2D dans un domaine de distance-Doppler sont extraites pour des fréquences ou bins (f_{R1,A}, f_{R2,A}) où l'amplitude ou la puissance dépasse un seuil ou qui ont un rapport signal sur bruit minimum.

6. Procédé selon les revendications 1 à 5, dans lequel l'étape d) comprend de mesurer un changement de phase bin à bin à travers la fonction de propagation de point 2D mesurée (PSF_{1,A}, PSF_{2,A}) évaluée dans un domaine de distance-Doppler.
